# EUROPÄISCHE PATENTSCHRIFT

(11) **EP 3 902 620 B1**
(45) Veröffentlichungstag und Bekanntmachung des Hinweises auf die Patenterteilung: **01.04.2026**
(21) Anmeldenummer: 19818063.0
(22) Anmeldetag: 10.12.2019
(51) Int. Cl.: B01D 29/15, B01D 36/00

(54) **FILTEREINSATZ FÜR EINEN KRAFTSTOFFFILTER MIT DREISTUFIGER FILTRATION**
FILTER INSERT FOR A FUEL FILTER WITH THREE-STAGE FILTRATION
CARTOUCHE FILTRANTE POUR UN FILTRE À CARBURANT AVEC FILTRATION À TROIS ÉTAGES

(30) Priorität: 21.12.2018 DE 102018133569
(43) Veröffentlichungstag der Anmeldung: 03.11.2021
(73) Patentinhaber: Hengst SE, 48147 Münster (DE)
(72) Erfinder: SCHULTE-WÜLWER, Tobias, 48147 Münster (DE)
(74) Vertreter: Patentanwälte Olbricht Buchhold Keulertz
(86) Internationale Anmeldenummer: PCT/EP2019/084527
(87) Internationale Veröffentlichungsnummer: WO 2020/126709

(56) Entgegenhaltungen:
- EP-A1- 2 910 290
- EP-A1- 3 261 743
- US-A1- 2016 151 727

## Beschreibung

Aus der US 2016/0151727 A1 ist ein gattungsgemäßer Filtereinsatz, für einen Kraftstofffilter bekannt. Der Kraftstofffilter ermöglicht eine dreistufige Filtration. In einer ersten Stufe werden Partikel zurückgehalten, in dem der Kraftstoff, der Wasseranteile enthält, durch ein Filtermedium strömt. Bei dem bekannten Filtereinsatz ist das Filtermedium als ein zylindrischer Papierfaltenfilter ausgestaltet, der von außen nach innen durchströmt wird. In der zweiten Stufe, die auf der Reinseite des Filtermediums angeordnet ist, also stromabwärts von dem Filtermedium und somit im Inneren des zylindrischen Filterrnediums, erfolgt mittels eines Coalescers eine Koagulation bzw. Agglomeration kleiner Wassertröpfchen. In der dritten Stufe, die stromabwärts von dem Coalescer angeordnet ist, werden die nun größeren Wassertropfen abgeschieden, beispielsweise mittels eines Abscheiders, der als hydrophob ausgerüstetes Sieb ausgestaltet ist. Die abgeschiedenen Wassertropfen strömen aufgrund ihrer höheren Dichte innerhalb des Kraftstoffs nach unten, wo im Kraftstofffilter ein Wassersammelraum vorgesehen ist, der regelmäßig geleert werden kann. Dementsprechend ist die Auslassöffnung für den gereinigten Kraftstoff oben im Filtereinsatz vorgesehen.

Es ergeben sich bei dieser dreistufigen Filtration mehrere Räume innerhalb des Kraftstofffilters, in denen der Kraftstoff in unterschiedlicher Qualität vorliegt: auf der Rohseite, außerhalb des Filtermediums, liegt Kraftstoff vor, der sowohl mit Wasseranteilen als auch mit Partikeln beladen ist. Zwischen dem Filtermedium und dem Coalescer befindet sich Kraftstoff, der feine Wassertröpfchen enthält. Zwischen dem Coalescer und dem Abscheider befindet sich Kraftstoff, der im Wesentlichen von Partikeln befreit ist, der aber noch Wasseranteile in Form größerer Tropfen enthält. Jenseits des Abscheiders befindet sich der gereinigte Kraftstoff, der möglichst frei von sowohl Partikeln als auch Wasser ist.

Ein als Abscheider dienendes Sieb ist bei diesem bekannten Filtereinsatz eingeklipst, d.h. mittels einer formschlüssigen Verbindung in dem Filtereinsatz gehalten. Bei der Herstellung des Filtereinsatzes müssen daher zunächst Rasthaken aufgeweitet werden. Dabei ist nicht auszuschließen bzw. besteht die Möglichkeit, dass die gewünschte Rastverbindung nicht richtig hergestellt wird oder die Haken beschädigt werden können, was jeweils zu Undichtigkeiten zwischen den erwähnten Räumen führen kann. Die erwähnte Möglichkeit einer Beschädigung kann auch dazu führen, dass ein Rasthaken während der Montage oder später brechen kann und dann zu Folgeschäden in einem mit dem Filter stromabwärts verbundenen Aggregat führen kann und der Filter seiner Kernaufgabe, sensible, fluidisch nachgeschaltete Bauteile, wie ein Einspritzsystem, Ventile, etc. vor Fremdpartikeln zu schützen, nicht nachkommen kann.

Um strenge Umweltauflagen einhalten zu können stellen moderne Einspritzanlagen von Verbrennungmotoren hohe Anforderungen an die Kraftstoffqualität. Insbesondere enthalten die Einspritzanlagen Bauteile, die durch die Einwirkung von Wasser beschädigt werden können und / oder an Präzision verlieren können. Es ist daher erforderlich, die unterschiedlichen Räume innerhalb des Kraftstofffilters so zuverlässig gegeneinander abzudichten, dass das Eindringen von Kraftstoff in einen nachfolgenden Raum nur dadurch möglich ist, dass der Kraftstoff dabei die entsprechende Behandlungsstufe durchläuft.

Aus der WO 2016/0879916 ist ein gattungsfremder Filtereinsatz für einen Kraftstofffilter bekannt. Erstens weist der Filtereinsatz keinen Coalescer auf. Zweitens ist keine Abdichtung zwischen den verschiedenen Räumen innerhalb des Kraftstofffilters vorgesehen, vielmehr sind für verschiedene Ausführungsformen stets Bypasskanäle vorgesehen, die benachbarte Räume miteinander verbinden.

Der Erfindung liegt die Aufgabe zugrunde, einen gattungsgemäßen Filtereinsatz dahingehend zu verbessern, dass dieser eine problemlose Montage der einzelnen Bauteile bei der Herstellung des Filtereinsatzes und eine zuverlässige Abdichtung der verschiedenen Räume innerhalb eines Kraftstofffilters ermöglicht.

Diese Aufgabe wird durch einen Filtereinsatz mit den Merkmalen des Anspruchs 1 gelöst. Vorteilhafte Ausgestaltungen sind in den Unteransprüchen beschrieben.

Die Erfindung schlägt mit anderen Worten vor, dass der Träger durch den Stützdom und die Endscheibe gehalten ist, so dass auf schmale, frei endende Bauelemente - wie z.B. Rasthaken - verzichtet werden kann und eine dementsprechend mechanisch robuste Konstruktion des Filtereinsatzes auch bei kleinen baulichen Abmessungen seiner einzelnen Elemente erreicht werden kann. Im einfachsten Fall begrenzen die Endscheibe und der Stützdom die axiale Beweglichkeit in entgegengesetzten Richtungen, es kann aber auch vorkommen, dass durch das Zusammenwirken von Endscheibe und Stützdom der Träger auf andere Weise durch diese beiden Bauteile gehalten ist, beispielsweise indem eine Klemmkraft auf den Träger ausgeübt wird. Dabei ist in an sich bekannter Weise vorgesehen, den Träger nicht in axialer Richtung, bezogen auf die Mittelachse des zylindrischen Filtermediums, sondern in radialer Richtung gegen ein dem Träger benachbartes Bauteil abzudichten.

Der Träger soll dabei vorzugsweise so abgedichtet sein, dass Kraftstoff ausschließlich durch den Abscheider zur Auslassöffnung des Filters strömen kann. Darunter wird auch als dicht verstanden, wenn an geeigneter Stelle im Filter, z.B. im Filtergehäuse oder im Filtereinsatz eine Entlüftungsbohrung vorgesehen ist, durch welche sich während der Filtration im Filter sammelndes Gas von der Roh- auf die Reinseite abgeführt werden kann oder von einer Zwischenstufe abgeführt werden kann, da im Betrieb typischerweise lediglich Luft durch diese Öffnung abgeführt wird und ein Bypass von Kraftstoff durch diese nicht erwünscht ist und nur in Grenzfällen auftritt.

Dabei kann vorgesehen sein, dass der Träger schwimmend gelagert ist, also in axialer Richtung beweglich ist. Aufgrund der radialen Abdichtung ergeben sich Klemmkräfte zwischen dem Träger und seinem benachbarten Bauteil. Der Träger ist also während der Herstellung des Filterelements aufgrund dieser Klemmkräfte gehalten, ohne dass es einer Verrastung bedarf.

Weiterhin wird durch die radiale Abdichtung eine geringfügige, als Spiel bezeichnete axiale Beweglichkeit des Trägers unter Beibehaltung der Dichtwirkung ermöglicht. Dies wird im Rahmen des vorliegenden Vorschlags als schwimmende Lagerung bezeichnet und ermöglicht einen Ausgleich von Fertigungstoleranzen sowohl bei den Einzelteilen als auch bei der Verbindung dieser zum Filtereinsatz. Die Fertigungstoleranzen betreffen einerseits die Abmessungen der Einzelteile des Filtereinsatzes. Hinzu kommt, dass bei der Herstellung des Filtereinsatzes, wenn die Einzelteile miteinander verbunden werden, während des Fügevorgangs Toleranzen auftreten können, wie noch näher erläutert werden wird. Dadurch, dass der Träger während der Fertigung des Filtereinsatzes nicht starr in einer axialen Stellung innerhalb des Filtermediums fixiert ist, kann die Bildung von Spalten ausgeschlossen werden, durch welche der Kraftstoff im späteren Betrieb des Kraftstofffilters ungewollt von einem in einen anderen Raum des Kraftstofffilters strömen könnte.

Vorteilhaft kann das Filtermedium an einer seiner beiden Stirnseiten - und ggf. an beicen Stimseiten - mit einer dort vorgesehenen Endscheibe stoffschlüssig verbunden sein. Der Stützdom hingegen ist frei von der betreffenden Endscheibe angeordnet, womit bezeichnet ist, dass er mit der betreffenden Endscheibe nicht stoffschlüssig verbunden ist. Beispielsweise kann das Filtermedium an eine aus Kunststoff bestehende Endscheibe grenzen und mit dieser Endscheibe verschweißt sein. Diese Ausgestaltung hat sich in der Praxis hervorragend bewährt. Die Verschweißung bringt es mit sich, dass die Endscheibe und / oder das Filtermedium erweicht werden, denn als Verschweißung wird im Rahmen des vorliegenden Vorschlags eine Verbindung eines Bauteils im teigigen oder flüssigen Zustand mit einem anderen Bauteil bezeichnet. Beispielsweise kann die Endscheibe thermisch, mittels Ultraschall, durch Infrarotstahlung oder chemisch erweicht werden. Auch wenn das Filtermedium, z.B. im Falle eines Papierfaltenfilterelements, nicht auf dieselbe Weise wie die Endscheibe erweicht werden kann, kann das Filtermedium mit der Endscheibe verschweißt werden, indem es in die erweichte Endscheibe eingedrückt wird und diese dann zur Erstarrung gebracht wird, beispielsweise abgekühlt wird. Es kann aber auch das Filtermedium selbst erweicht werden, z.B. wenn es aus Kunststoff besteht, beispielsweise aus einem Schaumwerkstoff. In jedem Fall erfolgt ein Wärmeeintrag in die Endscheibe und/oder das Filtermedium. Da bei einer vorschlagsgemäßen Ausgestaltung des Filtereinsatzes auf Rasthaken verzichtet werden kann, besteht keine Gefahr, dass die beim Fügen des Filtereinsatzes eingebrachte Hitze zu einer Schwächung oder Verformung derartiger Rasthaken oder für die Rasthaken benötigter Gegenkonturen führen könnte.

Zudem wird im Rahmen der Verschweißung, nämlich durch die Erweichung, das ursprüngliche Gesamtmaß der beiden aneinander anliegenden Bauteile verringert, wenn diese in der erwähnten axialen Richtung aneinander gedrückt werden. Dementsprechend können sich Toleranzen in axialer Richtung ergeben. Aufgrund der vorschlagsgemäß vorgesehenen radialen Abdichtung kann eine zuverlässige Vermeidung unerwünschter Leckagen zwischen den einzelnen Räumen des Filtereinsatzes gewährleistet werden.

Vorteilhaft kann der Coalescer am Stützdom gehalten sein, und der Stützdom kann radial gegen ein dem Stützdom benachbartes Bauteil des Filtereinsatzes in der Art abgedichtet sein, dass Kraftstoff ausschließlich durch den Coalescer hindurch zur Auslassöffnung des Filtereinsatzes strömen kann. Dem Fachmann leicht ersichtlich ist der Stützdom dazu nicht nur an der oberen Endscheibe und/oder dem Träger abgedichtet, sondern ebenfalls an der unteren Endscheibe. Hierzu kann der Stützdom beispielsweise an seinem unteren Ende eine Dichtstelle aufweisen oder an der unteren Endscheibe verklebt oder verschweißt sein. Als dicht wird auch hier verstanden, dass ggf. eine Entlüftungsbohrung vorgesehen sein kann, durch welche im Betrieb des Filters im Wesentlichen kein Kraftstoff, sondern sich bei der Filtration bildendes Gas strömt.

Der radial innerhalb des Filtermediums angeordnete Stützdom dient dazu, das Filtermedium gegen die im Betrieb auftretenden Drücke zu stützen und somit gegen Kollabieren zu sichern. Der Träger des Abscheiders kann eine außen umlaufende Dichtlippe aufweisen, die dem Stützdom anliegt.

Vorteilhaft kann die Endscheibe einen Stützabschnitt aufweisen, der dazu dient, die dichte Anlage der Dichtlippe des Trägers an dem Stützdom zu unterstützen. Hierzu erstreckt sich der Stützabschnitt von der Endscheibe in den Träger hinein, und zwar im Bereich der Dichtlippe. Der Stützabschnitt kann sich daher bis zur selben Höhe in den Träger hinein erstrecken, wo außen die Dichtlippe des Trägers verläuft.

Die Stützwirkung kann jedoch auch bereits dadurch erreicht werden, dass sich der Stützabschnitt bis in die Nähe dieser erwälhnten Höhe erstreckt, so dass bauraumabhängig radial größere Durchmesser der Einzelteile und damit verbundene größere Funktionsflächen realisiert werden können, indem die Dichtlippe einerseits und der Stützabschnitt andererseits in axialer Richtung versetzt zueinander angeordnet sind.

Abweichend von der vorbeschriebenen Ausgestaltung, dass der Träger abdichtend von innen dem Stützdom anliegt, kann vorgesehen sein dass der Träger gegen die oben erwähnte Endscheibe abgedichtet ist. Zu diesem Zweck kann die Endscheibe einen als Dichtring bezeichneten Abschnitt aufweisen, der sich in Art eines Rohrstutzens in das Innere des hohlzylindrischen Filtermediums erstreckt. Diesem Dichtring kann der Träger entweder von außen oder von innen anliegen.

In einer Ausgestaltung kann vorgesehen sein, dass sich der Dichtring der Endscheibe in das Innere des Trägers erstreckt, so dass der Träger diesem Dichtring von außen anliegt Alternativ dazu kann vorgesehen sein, dass der Dichtring einen größeren Durchmesser aufweist als der Träger, so dass der Träger dem Dichtring von innen anliegt. In beiden Fällen kann entweder der Dichtring eine Dichtlippe aufweisen, die dem Träger anliegt, oder die Abdichtung kann mittels einer Dichtlippe des Trägers erfolgen, die dem Dichtring der Endscheibe anliegt.

Vorteilhaft kann vorgesehen sein, dass auch bei hohen Temperaturen und einer dementsprechenden Relaxation der im Filtereinsatz verwendeten Kunststoff-Bauelemente eine zuverlässige Beibehaltung der Dichtwirkung gewährleistet ist. Wenn der Träger, wie weiter oben beschrieben, dem Stützdom von innen abdichtend anliegt, kann die Endscheibe zu diesem Zweck vorteilhaft einen Stützabschnitt aufweisen, der beispielsweise ähnlich wie der oben beschriebene Dichtring in Art eines Rohrstutzens ausgestaltet sein kann und dem Stützdom außen anliegt, um den Stützdom dort gegen radial nach außen wirkende Kräfte abzustützen, wo der Träger mit seiner Dichtlippe dem Stützdom anliegt.

Vorteilhaft werden im Filtereinsatz zwei Dichtstellen so hintereinander angeordnet, dass die radialen Kräfte beider Dichtungen sich beaufschlagen und unterstützen.

Um den Träger innerhalb des Stützdoms gegen Kippbewegungen zu sichern, welche die Dichtwirkung zwischen Träger und Stützdom verursachen könnten, können vorteilhaft ein oder mehrere Vorsprünge außen am Träger und / oder innen am Stützdom vorgesehen sein. Hierdurch kann der Träger innerhalb des Stützdoms geführt werden.

Der Vorsprung kann als Noppen ausgestaltet sein. Vorteilhaft jedoch kann der Vorsprung als eine längliche Rippe ausgestaltet sein, die sich in axialer Richtung erstreckt. Auf diese Weise kann dem Vorsprung eine gute mechanische Stabilität verliehen werden, während er dem daran entlang strömenden Fluid - beispielsweise dem vom Abscheider zurückgehaltenen Wasser - i n seiner Strömungsrichtung einen möglichst geringen Strömungswiderstand bietet, wodurch die Effizienz des Kraftstofffilters - beispielsweise die Funktion des Abscheiders - verbessert wird.

Vorteilhaft können um den Umfang des Trägers verteilt mehrere Vorsprünge angeordnet sein, so dass der Träger gegen Kippbewegungen in jeglicher Richtung gesichert ist. Falls nur ein einziger Vorsprung vorgesehen sein soll, kann dieser beispielsweise wendelförmig am Umfang des Trägers verlaufen, so dass eine Abstützung ringsum gewährleistet ist und gleichzeitig ein wendelförmiger Strömungspfad für den Kraftstoff und/oder das abgeschiedene Wasser geschaffen ist.

Vorteilhafte Ausgestaltungen eines Filtereinsatzes für einen Kraftstofffilter werden anhand der rein schematischen Darstellungen nachfolgend näher erläutert. Dabei zeigt
- Fig. 1: einen Längsschnitt durch ein erstes Ausführungsbeispiel eines Filtereinsatzes eines Kraftstofffilters,
- Fig. 2 bis 7: ausschnittsweise Längsschnitte durch weitere Ausführungsbeispiele von Filtereinsätzen, und die
- Fig. 8 und 9: ausschnittsweise einen Längsschnitt durch ein weiteres Ausführungsbeispiel in verschiedenen Montageschritten bei der Herstellung des Filtereinsatzes.

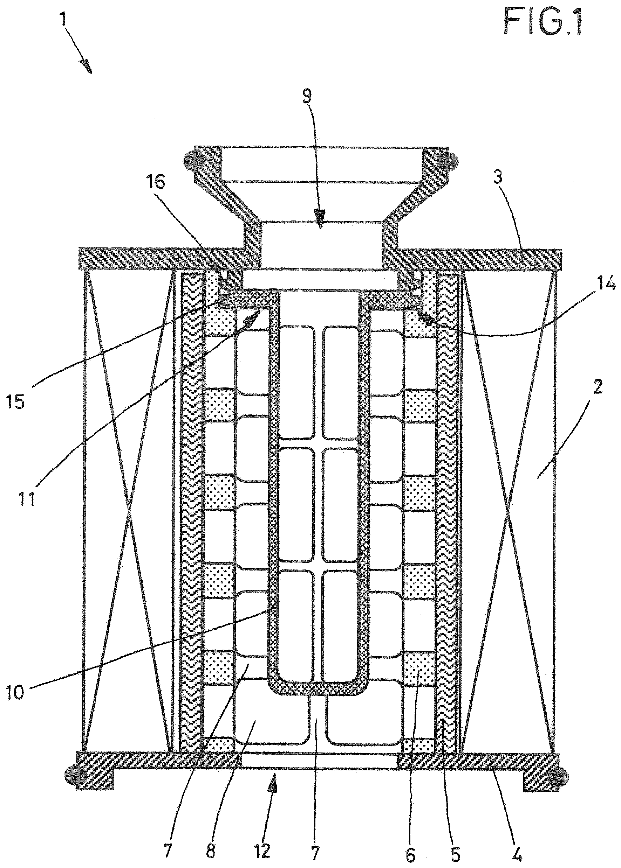

In Fig. 1 ist ein Filtereinsatz 1 dargestellt, der ein zylindrisches Filtermedium 2 aufweist, welches zwischen einer oberen Endscheibe 3 und einer unteren Endscheibe 4 angeordnet und mit diesen verschweißt ist. Die dargestellte Ausrichtung, und daher die Bezeichnungen wie oben und unten, entspricht der späteren Ausrichtung des Filtereinsatzes 1 im Betrieb. Die Bauteile des Filtereinsatzes 1 werden nachfolgend anhand der Benutzung des Filtereinsatzes 1 im Betrieb erläutert.

Ungefilterter Kraftstoff strömt radial von außen durch das Filtermedium 2 und gelangt so von der äußeren Rohseite nach innen auf die Reinseite des Filtereinsatzes 1. Im Kraftstoff befindliche Wasseranteile haben sich beim Durchtritt durch das Filtermedium 2 zu feinen Tröpfchen verteilt. Auf der Reinseite, in Strömungsrichtung dem Filtermedium 2 nachgeschaltet, ist ein zylindrischer Coalescer 5 angeordnet. Die Wassertröpfchen coagulieren dort zu größeren Tropfen.

Radial innerhalb des Coalescers 5 ist ein im Wesentlichen zylindrischer Stützdom 6 angeordnet, der eine Vielzahl von Rippen 7 und Durchtrittsfenstern 8 aufweist. Der Kraftstoff mit den größeren Wassertropfen gelangt durch die Durchtrittsfenster 8 in das Innere des Stützdorns 6. In der oberen Endscheibe 3 ist eine Auslassöffnung 9 für den Kraftstoff vorgesehen. Auf seinem Weg zur Auslassöffnung 9 passiert der mit den Wassertropfen beladene Kraftstoff einen Abscheider 10, der im Beispiel als hydrophobes Sieb ausgestaltet ist. Das Sieb ist in Art einer mit Boden versehenen Hülse geformt und an seinem oberen Ende an einem Träger 11 befestigt, der aus Kunststoff besteht. An dem Abscheider 10 werden die Wassertropfen aus dem Kraftstoff abgeschieden. Sie strömen abwärts und gelangen durch eine als Wasserauslass 12 bezeichnete Öffnung, die in der unteren Endscheibe 4 vorgesehen ist, aus dem Filtereinsatz 1 heraus.. Ein Kraftstofffilter, in welchem der Filtereinsatz 1 angeordnet ist, weist unterhalb des Filtereinsatzes 1 einen Wassersammelraum auf.

Bei dem Ausführungsbeispiel der Fig. 1 weist der Stützdom 6 an seinem oberen Ende einen Absatz 14 auf. Innerhalb dieses Absatzes 14 liegt der Träger 11 dem Stützdom 6 von innen radial abdichten mit einer Dichtlippe 15 an. Die obere Endscheibe 3 weist einen nach unten ragenden Klemmring 16 auf, der ebenfalls innerhalb des Absatzes 14 dem Stützdom 6 von innen anliegt. Auf diese Weise können während der Montage des Filtereinsatzes 1 der Stützdom und der Träger 11 mitsamt dem Abscheider 10 gehalten werden, bis die beiden Endscheiben 3, 4 mit dem Filtermedium 2 verschweißt sind, wobei der Coalescer 5 zuvor entweder auf den Stützdom 6 aufgesteckt werden kann oder in das Innere des Filtermediums 2 gestellt werden kann und vorzugsweise durch Klemmkräfte an diesem jeweiligen Bauteil gehalten und so während der Montage vorübergehend in der gewünschten Position fixiert wird. Zusätzlich zu seiner Haltefunktion kann der Klemmring 16 bei diesem und bei anderen Ausführungsbeispielen auch eine Dichtungsfunktion aufweisen.

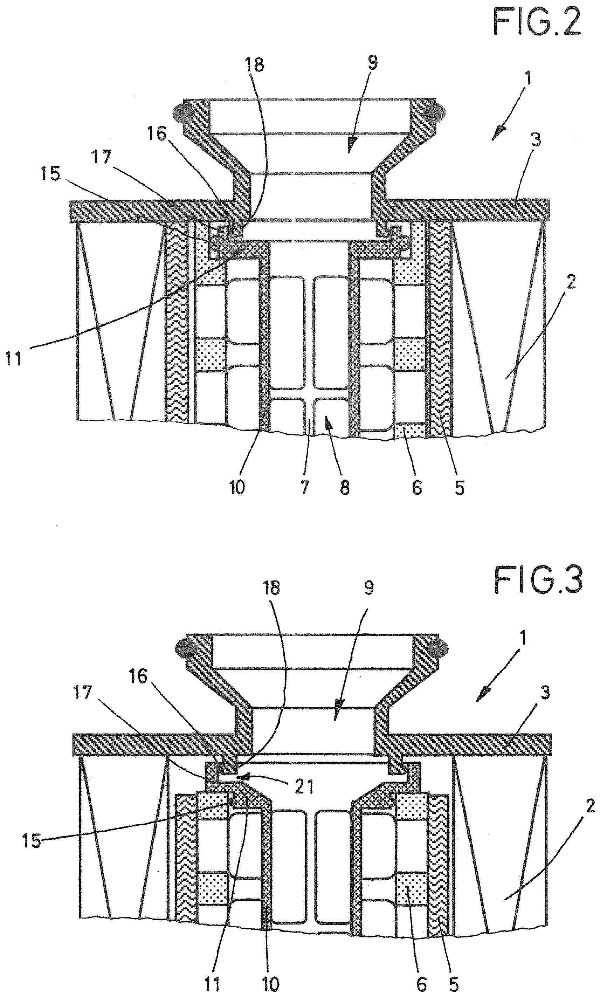

Bei dem Ausführungsbeispiel der Fig. 2 weist der Klemmring 16 der oberen Endscheibe 3 einen geringeren Durchmesser auf als die Dichtlippe 15 des Trägers 11. Der Träger 11 weist in diesem Fall einen Stützkragen 17 auf, der sich über die Dichtlippe 15 hinaus nach oben erstreckt. Der Klemmring 16 ist bei diesem Ausführungsbeispiel Teil eines Innenkragens 18, der an die obere Endscheibe 3 angeformt ist und sich in das Innere des Filtereinsatzes 1 erstreckt. Der Klemmring 16 dient erstens dazu, den Träger 11 und mittels diesem auch den Stützdom 6 während der Montage des Filtereinsatzes 1 an der oberen Endscheibe zu halten. Zweitens jedoch bewirkt der Innenkragen 18 als Stützabschnitt auch eine Abstützung des Stützkragens 17 und der Dichtlippe 15 und gewährleisten so die dichte Anlage der Dichtlippe 15 an dem Stützdom 6. Der Klemmrings 16 befindet sich dabei nahezu auf derselben Höhe wie die Dichtlippe 15 bzw. schließt höhenmäßig an die Höhe der Dichtlippe 15 an.

Fig. 3 zeigt ein Ausführungsbeispiel, dessen obere Endscheibe 3 im Wesentlichen dem der Fig. 2 entspricht. Der Stützkragen 17 des Trägers 11 ist jedoch höher als beim Ausführungsbeispiel der Fig. 2, und der Klemmring 16 des Innenkragens 18 der oberen Endscheibe 3 ist gegenüber der Dichtlippe 15 des Trägers 11 nach oben versetzt. Auch in diesem Fall kommt dem Innenkragen 18 die Wirkung eines Stützabschnitts zu, der nämlich die Dichtlippe 15 gegen nach innen wirkende Kräfte abstützt.

Außerdem kann der Kontakt zwischen dem Klemmring 16 und dem Stützkragen 17 des Trägers 11 auch dazu dienen, die Rohseite eines Kraftstofffilters gegenüber der Auslassöffnung 9 abzudichten. Kraftstoff, der durch das Filtermedium 2 hindurch getreten ist, aber weder den Coalescer 5 noch den Abscheider 10 passiert hat, soll nicht unter der oberen Endscheibe 3 in das Innere des Trägers 11 und weiter zur Auslassöffnung 9 strömen können. Daher ist der Innenkragen 18 bei dem Ausführungsbeispiel Fig. 3 gleichzeitig auch als Dichtring 21 bezeichnet, der mit dem Klemmring 16 dem Stützkragen 17 für Kraftstoff und Wasser dicht anliegt.

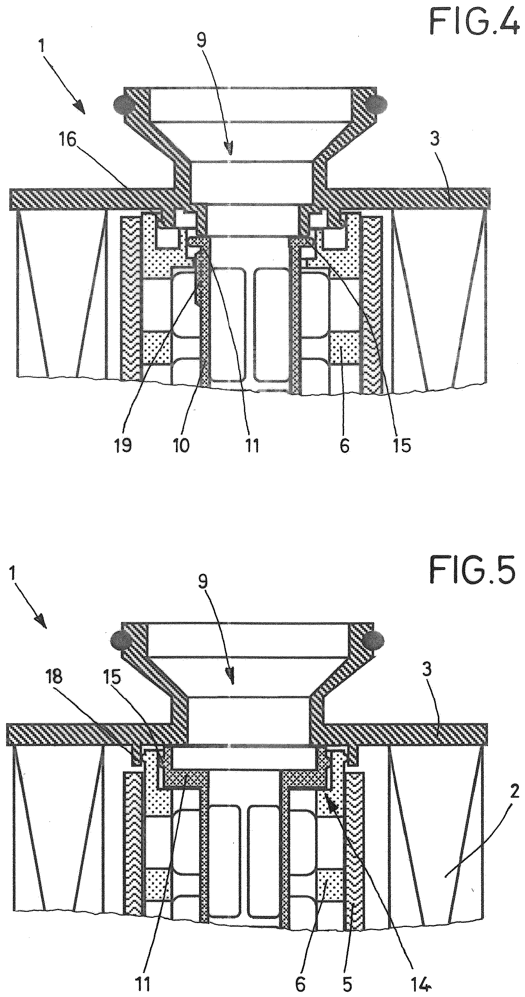

Fig. 4 zeigt einen Träger 11, der am Umfang verteilt angeordnete, sich in axialer Richtung erstreckende Vorsprünge 19 in Form von Rippen aufweist, die den Träger 11 gegen axiale Schrägstellungen sichern und den Träger 11 mitsamt dem Abscheider 10 gegen Kippbewegungen innerhalb des Stützdoms 6 sichern. Rein beispielhaft sind bei diesem Ausführungsbeispiel drei Vorsprünge 19 vorgesehen, die um den Umfang des Trägers 11 gleichmäßig verteilt angeordnet sind, so dass in der Zeichnung lediglich eine der drei Vorsprünge 19 sichtbar ist. Auch bei diesem Ausführungsbeispiel liegt die Dichtlippe 15 des Trägers 11 dem Stützdom 6 von innen an.

Fig. 5 zeigt eine serielle Anordnung von zwei Dichtungen auf gleicher Höhe: die Dichtlippe 15 des Trägers 11 liegt auch bei diesem Ausführungsbeispiel innerhalb eines Absatzes 14 dem Stützdom 6 von innen an. Der Stützdom 6 weist seinerseits auf gleicher Höhe an seiner Außenseite eine umlaufende Dichtlippe auf, die dem Innenkragen 16 der oberen Endscheibe 3 anliegt. Auch in diesem Fall kommt dem Innenkragen 16 die Wirkung eines Stützabschnitts zu, denn er stützt den Innendorn 6 gegen nach außen wirkende Kräfte und stellt so sicher, dass die Dichtlippe 15 dem Innendom 6 gegenüber auch unter ungünstigen Betriebsbedingungen des Kraftstofffilters abdichtend anliegt.

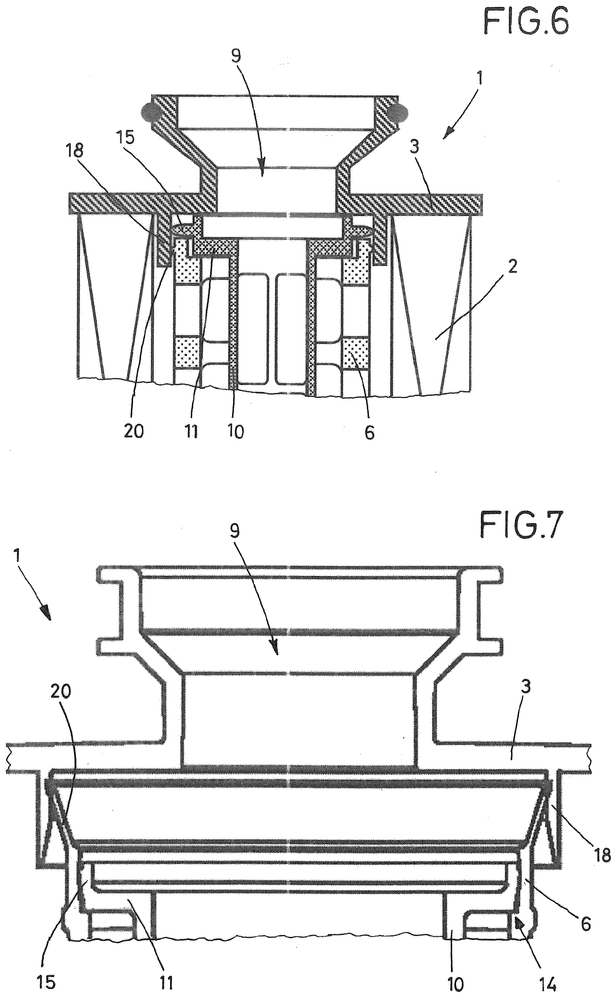

In Fig. 6 erstreckt sich der Innenkragen 18 im Vergleich zu Fig. 5 weiter in das Innere des Filtereinsatzes 1. Sowohl der Träger 11 mit seiner Dichtlippe 15 als auch der Innendom 6 mit einer eigenen Dichtlippe, die als Domlippe bezeichnet ist, liegen jeweils von innen diesem Innenkragen 18 abdichtend an.

Die Fig. 7 zeigt ein Ausführungsbeispiel, bei welchem der Innenkragen 18 der oberen Endscheibe 3 auf seiner Innenseite eine Einführschräge bildet. Am oberen Ende des Stützdoms 6 ist eine umlaufende, sich nach oben erweiternde Domlippe 20 angeformt. Innerhalb des Stützdoms 6 ist der Träger 11 des Abscheiders 10 angeordnet. Während der Montage des Filtereinsatzes 1 ist der Träger 11 im Stützdom 6 gegen Herausfallen gesichert. Hierzu weist der Stützdorn 6 einen Absatz 14 auf, auf welchem der Träger 11 aufliegt. Innerhalb dieses Absatzes 14 liegt der Träger 11 dem Stützdom 6 auch mit seiner Dichtlippe 15 an. Wie in Fig. 7 angedeutet ist, ist der maximale Durchmesser der konisch verlaufenden Domlippe 20 größer als der Innendurchmesser des Innenkragens 18. Wenn bei der Montage des Filtereinsatzes 1 der Stützdorn 6 mit seiner Domlippe 20 in den Innenkragen 18 gepresst wird. wird dementsprechend die Domlippe 20 radial nach innen gestaucht. Dabei legt sich auch die äußere Wand des Absatzes 14 an die Dichtlippe 15 abdichtend an.

Erst durch das Zusammenspiel der oberen Endscheibe 3, insbesondere deren Innenkragens 18, mit dem Stützdom 6 wird daher der Träger 11 im Filterelement 1 festgelegt. Obwohl die Dichtlippe 15 tiefer angeordnet ist als der Innenkragen 18, wirkt der Innenkragen 18 über die Domlippe 20 in der Weise auf den Stützdom 6 ein, dass der Innenkragen 18 die Halterung bzw. Festlegung des Trägers 11 im Stützdom 6 bewirkt.

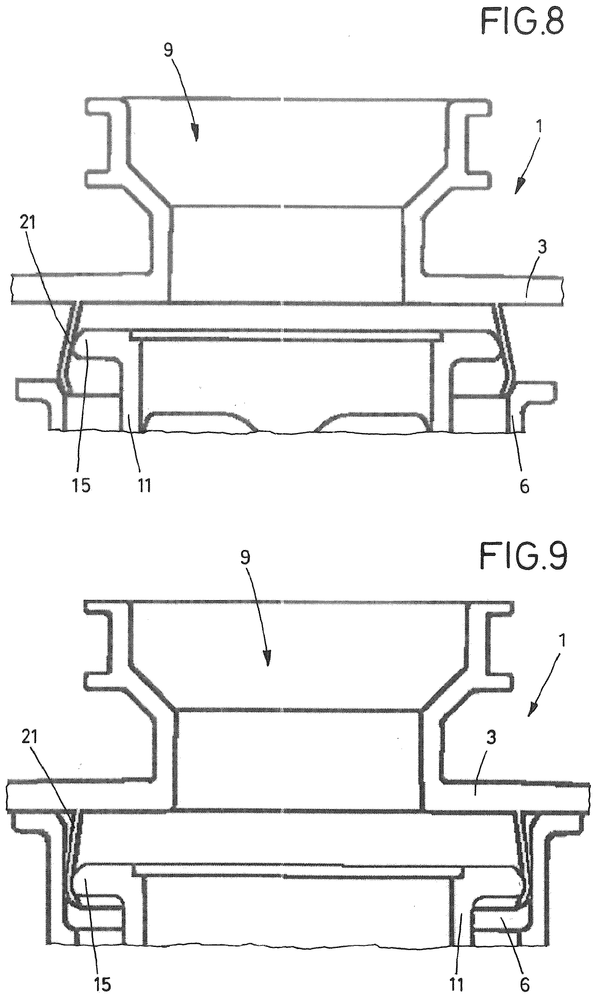

Fig. 8 zeigt eine obere Endscheibe 3, die keinen stabilen Innenkragen 18 aufweist, sondern einen Dichtring 21, der eine geringe Wandstärke aufweist und bewusst elastisch verformbar ausgestaltet ist. Ausgehend von der oberen Endscheibe 3 erweitert sich der Durchmesser des Dichtrings 21 zunächst mit zunehmendem Abstand von der Endscheibe 3. Der Träger 11 mit seiner Dichtlippe 15 ist Innerhalb dieses Dichtrings 21 angeordnet, und der Stützdom 6 ist dem Dichtring 21 von unten angelegt. Diese Anordnung stellt einen Montageschritt während der Herstellung des Filtereinsatzes 1 dar.

Fig. 9 zeigt einen späteren Montageschritt, bell welchem nämllich der Stützdom 6 bis an die obere Endscheibe 3 herangeschoben wird. Der Dichtring 21 wird hierdurch zu einem geringeren Durchmesser gestaucht. Er weist in seinem Querschnitt einen bogenförmigen Verlauf auf, wobei dieser Bogen sich in der Nähe des freien, von der oberen Endscheibe 3 entfernten Endes des Dichtrings 21 befindet Unter der Einwirkung des Stauchdrucks wandert die Dichtlippe 15 des Trägers 1 1 in den Bereich dieses Bogens, weil der Dichtring 21 dort seinen größten Durchmesser aufweist, so dass anschl ießend der Träger 11 seinen in Fig. 9 dargestellten stabilen und gegen den Dichtring 21 abgedicht,eten Sitz einnirnrnt.

Der erwähnte Bogen definiert den maximalen Durchmesser des Dichtrings 21. Auf der von der Endscheibe 3 abgewandten Seite des Bogens bildet der Dichtring 21 eine Einführschräge, in dem sich sein Durchmesser vom Bogen bis zum freien Ende des Dichtrings 21 wieder verringert. Diese Einführschräge erleichtert es, den Stützdorn 6 auf den Dichtring 21 aufzuschieben bzw. den Dichtring 21 in den Stützdom 6 einzuführen und den Träger 11 klemmend festzulegen.

### Bezugszeichen:

- 1: Filtereinsatz
- 2: Filtermedium
- 3: Obere Endscheibe
- 4: Untere Endscheibe
- 5: Coalescer
- 6: Stützdom
- 7: Rippe
- 8: Durchtrittsfenster
- 9: Auslassöffnung
- 10: Abscheider
- 11: Träger
- 12: Wasserauslass
- 14: Absatz
- 15: Dichtlippe
- 16: Klemmring
- 17: Stützkragen - am Träger
- 18: Innenkragen - an der oberen Endscheibe
- 19: Vorsprung
- 20: Domlippe
- 21: Dichtring

## Patentansprüche

1. Filtereinsatz (1) für einen Kraftstofffilter,
wobei der Filtereinsatz (1) ein von einem Kraftstoff-Wasser-Gemisch radial von außen nach innen durchströmbares, hohlzylindrisches Filtermedium (2) aufweist,
in dessen Innenraum ein fluiddurchlässiger Stützdom (6) angeordnet ist,
sowie dem Filtermedium (2) in Strömungsrichtung nachgeschaltet, auf der Reinseite des Filtereinsatzes (1), einen Wassertröpfchen koagulierenden Coalescer (5),
und einen dem Coalescer (5) in Strömungsrichtung nachgeschalteten, Wasser aus dem Kraftstoff-Wasser-Gemisch abscheidenden Abscheider (10),
und der Abscheider (10) an einem Träger (11) angeordnet ist,
der als separates Bauteil im Filtereinsatz (1) gehalten ist, und wobei der Filtereinsatz (1) eine Endscheibe (3) mit einer Auslassöffnung (9) für gereinigten Kraftstoff aufweist und der Träger (11) Innerhalb des Stützdoms (6) angeordnet ist und einem ihm benachbarten Bauteil dicht anliegt, wobei der Träger (11) radial gegen das dem Träger (11) benachbarte Bauteil des Filtereinsatzes (1) abgedichtet ist, **dadurch gekennzeichnet,**
**dass** der Träger (11) in Richtung der Längsachse des Filtermediums (2) durch den Stützdom (6) und die Endscheibe (3) gehalten ist.

2. Filtereinsatz nach Anspruch 1,
**dadurch gekennzeichnet,**
**dass** das Filtermediurn (2) mit der Endscheibe (3) stoffschlüssig verbunden ist
und der Stützdom (6) frei von der Endscheibe (3) angeordnet ist.

3. Filtereinsatz nach Anspruch 1 oder 2,
**dadurch gekennzeichnet,**
**dass** der Coalescer (5) am Stützdom (6) gehalten ist und der Stützdom (6) radial gegen ein dem Stützdom (6) benachbartes Bauteil des Filtereinsatzes (1) abgedichtet ist.

4. Filtereinsatz nach einem der vorhergehenden Ansprüche, **dadurch gekennzeichnet,**
**dass** der Träger (11) eine äußere, umlaufende Dichtlippe (15) aufweist, welche dem Stützdom (6) anliegt.

5. Filtereinsatz nach den Anspruch 4,
**dadurch gekennzeichnet,**
**dass** die Endscheibe (3) einen Innenkragen (18) aufweist, der sich als Stützabschnitt in das Innere des Trägers (11) erstreckt und den Träger (11) im Bereich der Dichtlippe (15) gegen radial nach innen wirkende Kräfte abstützt.

6. Filtereinsatz nach Anspruch 5,
**dadurch gekennzeichnet,**
**dass** die Dichtlippe (15) des Trägers (11) und der als Stützabschnitt wirkende Innenkragen (18) der Endscheibe (3) in axialer Richtung versetzt zueinander angeordnet sind.

7. Filtereinsatz nach einem der Ansprüche 1 bis 3,
**dadurch gekennzeichnet,**
**dass** die Endscheibe (3) einen Dichtring (21) aufweist, der sich in den Innenraum des hohlzylindrischen Filtermediums (2) erstreckt,
und **dass** zwischen dem Träger (11) und dem Dichtring (21) eine Dichtlippe (15) angeordnet ist, welche von einem dieser beiden Bauteile gebildet ist und welcher das andere dieser beiden Bauteile anliegt.

8. Filtereinsatz nach Anspruch 4,
**dadurch gekennzeichnet,**
**dass** die Endscheibe (3) einen als Stützabschnitt dienenden Innenkragen (18) aufweist, der dem Stützdom (6) außen anliegt und den Stützdom (6) im Bereich der Dichtlippe (15) des Trägers (11) gegen radial nach außen wirkende Kräfte abstützt.

9. Filtereinsatz nach einem der vorhergehenden Ansprüche, **dadurch gekennzeichnet,**
**dass** außen am Träger (11) und / oder innen am Stützdom (6) ein die Kippbeweglichkeit des Trägers (11) im Stützdom (6) begrenzender Vorsprung (19) angeordnet ist.

10. Filtereinsatz nach Anspruch 9,
**dadurch gekennzeichnet,**
**dass** der Vorsprung (19) als sich in axialer Richtung erstreckende Rippe ausgestaltet ist.

11. . Filtereinsatz nach Anspruch 9 oder 10,
**dadurch gekennzeichnet,**
**dass** um den Umfang des Trägers (11) verteilt mehrere Vorsprünge (19) angeordnet sind.

12. Filtereinsatz nach einem der vorhergehenden Ansprüche, **dadurch gekennzeichnet,**
**dass** der Träger (11) in Art einer schwimmenden Lagerung in Richtung der Längsachse des Filtermediums (2) Spiel hat.

13. Filtereinsatz nach Anspruch 8 oder 9,
**dadurch gekennzeichnet,**
**dass** der Stützdom (6) eine elastisch verformbare Domlippe (20) aufweist, deren Außendurchmesser größer ist als der Innendurchmesser des Innenkragens (18),
derart, dass der Innenkragen (18) einen den Träger (11) am Stützdom (6) festlegenden Stauchdruck auf die Domlippe (20) bewirkt.

14. Filtereinsatz nach Anspruch 7,
**dadurch gekennzeichnet,**
**dass** sich der Träger (11) in den Dichtring (21) erstreckt, der Träger (11) eine außen umlaufende Dichtlippe (15) aufweist,
der Dichtring (21) elastisch verformbar ist,
und sich sein Durchmesser von der Endscheibe (3) aus erweitert,
und der Stützdom (6) dem Dichtring (21) außen in der Art anliegt, dass der Dichtring (21) durch den Stützdom (6) komprimiert und der Träger (11) dadurch festgelegt ist.

15. Filtereinsatz nach Anspruch 14,
**dadurch gekennzeichnet,**
**dass** der Durchmesser des Dichtrings (21) von der Endscheibe (3) aus zunächst größer und nach Erreichen eines Maximums wieder kleiner wird.

## Claims

1. Filter insert (1) for a fuel filter,
wherein the filter insert (1) has a hollow-cylindrical filter medium (2) through which a fuel-water mixture can flow radially from the outside to the inside and in the interior space of which a fluid-permeable support dome (6) is arranged,
and downstream of the filter medium (2) in the flow direction, on the clean side of the filter insert (1), a coalescer (5) coagulating water droplets,
and a separator (10) downstream of the coalescer (5) in the flow direction separating water from the fuel-water mixture,
and the separator (10) is arranged on a carrier (11) which is held as a separate component in the filter insert (1), and wherein the filter insert (1) has an end disc (3) with an outlet opening (9) for cleaned fuel and the carrier (11) is arranged within the support dome (6) and bears tightly against a component adjacent thereto, wherein the carrier (11) is sealed radially in relation to the component of the filter insert (1) that is adjacent to the carrier (11),
**characterized**
**in that** the carrier (11) is held in the direction of the longitudinal axis of the filter medium (2) by the support dome (6) and the end disc (3).

2. Filter insert according to Claim 1,
**characterized**
**in that** the filter medium (2) is cohesively connected to the end disc (3)
and the support dome (6) is arranged freely from the end disc (3).

3. Filter insert according to Claim 1 or 2, **characterized**
**in that** the coalescer (5) is held on the support dome (6) and the support dome (6) is sealed radially in relation to a component of the filter insert (1) that is adjacent to the support dome (6).

4. Filter insert according to any of the preceding claims,
**characterized**
**in that** the carrier (11) has an outer peripheral sealing lip (15) which bears against the support dome (6).

5. Filter insert according to Claim 4,
**characterized**
**in that** the end disc (3) has an inner collar (18) which extends as a support portion into the interior of the carrier (11) and supports the carrier (11) in the region of the sealing lip (15) against radially inwardly acting forces.

6. Filter insert according to Claim 5,
**characterized**
**in that** the sealing lip (15) of the carrier (11) and the inner collar (18), acting as a support portion, of the end disc (3) are arranged offset with respect to one another in the axial direction.

7. Filter insert according to any of Claims 1 to 3, **characterized**
**in that** the end disc (3) has a sealing ring (21) which extends into the interior space of the hollow-cylindrical filter medium (2),
and **in that** a sealing lip (15) is arranged between the carrier (11) and the sealing ring (21), said sealing lip being formed by one of these two components and bearing against the other of these two components.

8. Filter insert according to Claim 4,
**characterized**
**in that** the end disc (3) has an inner collar (18) which serves as a support portion, bears externally against the support dome (6) and supports the support dome (6) in the region of the sealing lip (15) of the carrier (11) against radially outwardly acting forces.

9. Filter insert according to any of the preceding claims,
**characterized**
**in that** a projection (19) limiting the tiltability of the carrier (11) in the support dome (6) is arranged on the outside of the carrier (11) and/or on the inside of the support dome (6).

10. Filter insert according to Claim 9,
**characterized**
**in that** the projection (19) is designed as a rib extending in the axial direction.

11. Filter insert according to Claim 9 or 10, **characterized**
**in that** a plurality of projections (19) are arranged distributed around the periphery of the carrier (11).

12. Filter insert according to any of the preceding claims,
**characterized**
**in that** the carrier (11) has play in the direction of the longitudinal axis of the filter medium (2) in the manner of a floating mounting.

13. Filter insert according to Claim 8 or 9, **characterized**
**in that** the support dome (6) has an elastically deformable dome lip (20), the outer diameter of which is greater than the inner diameter of the inner collar (18), in such a way that the inner collar (18) brings about a compressing pressure, which fixes the carrier (11) on the support dome (6), on the dome lip (20).

14. Filter insert according to Claim 7,
**characterized**
**in that** the carrier (11) extends into the sealing ring (21), wherein the carrier (11) has an externally peripheral sealing lip (15),
the sealing ring (21) is elastically deformable,
and its diameter widens from the end disc (3),
and wherein the support dome (6) bears externally against the sealing ring (21) in such a way that the sealing ring (21) is compressed by the support dome (6) and the carrier (11) is thereby fixed.

15. Filter insert according to Claim 14,
**characterized**
**in that** the diameter of the sealing ring (21) initially becomes larger from the end disc (3) and, after reaching a maximum, becomes smaller again.

## Revendications

1. Insert filtrant (1) pour un filtre à carburant, dans lequel l'insert filtrant (1) présente un milieu filtrant cylindrique creux (2) qui peut être traversé radialement de l'extérieur vers l'intérieur par un mélange carburant-eau,
dans l'espace intérieur duquel est disposé un dôme de soutien perméable aux fluides (6),
ainsi qu'un coalesceur (5) coagulant les gouttelettes d'eau en aval du milieu filtrant (2) dans la direction d'écoulement, sur le côté propre de l'insert filtrant (1),
et un séparateur (10) en aval du coalesceur (5) dans la direction d'écoulement, séparant l'eau du mélange carburant-eau,
et le séparateur (10) est disposé sur un support (11), qui est maintenu en tant que composant séparé dans l'insert filtrant (1), et dans lequel l'insert filtrant (1) présente une rondelle d'extrémité (3) avec une ouverture de sortie (9) pour le carburant purifié et le support (11) est disposé à l'intérieur du dôme de soutien (6) et s'applique de manière étanche contre un composant adjacent, le support (11) étant radialement étanche contre le composant de l'insert filtrant (1) adjacent au support (11),
**caractérisé**
**en ce que** le support (11) est maintenu dans la direction de l'axe longitudinal du milieu filtrant (2) par le dôme de soutien (6) et la rondelle d'extrémité (3).

2. Insert filtrant selon la revendication 1,
**caractérisé**
**en ce que** le milieu filtrant (2) est relié par liaison de matière à la rondelle d'extrémité (3)
et le dôme de soutien (6) est libre de la rondelle d'extrémité (3).

3. Insert filtrant selon la revendication 1 ou 2, **caractérisé**
**en ce que** le coalesceur (5) est maintenu sur le dôme de soutien (6)
et le dôme de soutien (6) est étanche radialement contre un composant de l'insert filtrant (1) adjacent au dôme de soutien (6).

4. Insert filtrant selon l'une quelconque des revendications précédentes,
**caractérisé**
**en ce que** le support (11) présente une lèvre d'étanchéité périphérique extérieure (15) qui est appliquée contre le dôme de soutien (6).

5. Insert filtrant selon la revendication 4, **caractérisé**
**en ce que** la rondelle d'extrémité (3) présente une collerette intérieure (18) qui s'étend en tant que section de soutien à l'intérieur du support (11) et soutient le support (11) dans la zone de la lèvre d'étanchéité (15) contre des forces agissant radialement vers l'intérieur.

6. Insert filtrant selon la revendication 5, **caractérisé**
**en ce que** la lèvre d'étanchéité (15) du support (11) et la collerette intérieure (18) de la rondelle d'extrémité (3) servant de section de soutien sont disposées dans une direction axiale décalée l'une par rapport à l'autre.

7. Insert filtrant selon l'une quelconque des revendications 1 à 3,
**caractérisé**
**en ce que** la rondelle d'extrémité (3) présente une bague d'étanchéité (21) s'étendant à l'intérieur du milieu filtrant cylindrique creux (2),
et **en ce qu'**entre le support (11) et la bague d'étanchéité (21) est disposée une lèvre d'étanchéité (15) formée par l'un de ces deux composants et contre laquelle l'autre de ces deux composants est appliqué.

8. Insert filtrant selon la revendication 4,
**caractérisé**
**en ce que** la rondelle d'extrémité (3) présente une collerette intérieure (18) servant de section de soutien, qui s'applique extérieurement contre le dôme de soutien (6) et soutient le dôme de soutien (6) dans la zone de la lèvre d'étanchéité (15) du support (11) contre des forces agissant radialement vers l'extérieur.

9. Insert filtrant selon l'une quelconque des revendications précédentes,
**caractérisé**
**en ce qu'**une saillie (19) limitant la mobilité de basculement du support (11) dans le dôme de soutien (6) est disposée à l'extérieur du support (11) et/ou à l'intérieur du dôme de soutien (6).

10. Insert filtrant selon la revendication 9, **caractérisé**
**en ce que** la saillie (19) est conçue comme une nervure s'étendant dans la direction axiale.

11. Insert filtrant selon la revendication 9 ou 10, **caractérisé**
**en ce que** plusieurs saillies (19) sont disposées autour de la circonférence du support (11).

12. Insert filtrant selon l'une quelconque des revendications précédentes,
**caractérisé**
**en ce que** le support (11) présente un jeu dans la direction de l'axe longitudinal du milieu filtrant (2) à la manière d'un palier flottant.

13. Insert filtrant selon la revendication 8 ou 9, **caractérisé**
**en ce que** le dôme de soutien (6) comporte une lèvre de dôme (20) élastiquement déformable dont le diamètre extérieur est supérieur au diamètre intérieur de la collerette intérieure (18),
de telle sorte que la collerette intérieure (18) exerce une pression de compression sur la lèvre de dôme (20), qui est déterminée par le support (11) sur le dôme de soutien (6).

14. Insert filtrant selon la revendication 7, **caractérisé**
**en ce que** le support (11) s'étend dans la bague d'étanchéité (21), le support (11) comportant une lèvre d'étanchéité circonférentielle extérieure (15),
la bague d'étanchéité (21) est déformable élastiquement, et son diamètre s'élargit à partir de la rondelle d'extrémité (3),
le dôme de soutien (6) s'applique contre la bague d'étanchéité (21) à l'extérieur de telle sorte que la bague d'étanchéité (21) est comprimée par le dôme de soutien (6) et que le support (11) est ainsi fixé.

15. Insert filtrant selon la revendication 14, **caractérisé**
**en ce que** le diamètre de la bague d'étanchéité (21) est initialement plus grand par rapport à la rondelle d'extrémité (3) et de nouveau plus petit après avoir atteint un maximum.
